# EUROPEAN PATENT APPLICATION

(11) **EP 1 482 713 A2**
(43) Date of publication of application: **01.12.2004**
(21) Application number: 04253107.9
(22) Date of filing: 27.05.2004
(51) Int. Cl.: H04L 29/12

(54) **System and method for routing messages over disparate networks**

(30) Priority: 28.05.2003 US 447059
(71) Applicant: Openwave Systems Inc., Redwood City, CA 94063 (US)
(72) Inventor: Roselinsky, Milt, Santa Barbara, CA 93105 (US)
(74) Representative: Jackson, Richard Eric

(57) **Abstract**

A system and method for resolving message address information uses a dynamic address resolution server and/or an address resolution rules engine to resolve partial, incomplete, indirect, non-native or external message address information. The address resolution server and the address resolution rule engine determine a destination network associated with the non-native or external address information and modifies the address information so that the message can be routed to the destination network.

## Description

### TECHNICAL FIELD

This invention relates in general to exchanging messages between users on different types of communications networks and, more particularly, to a system and method for determining the proper address information to use to route messages across different networks.

### BACKGROUND

Currently, in order to send an electronic message, such a text message, an image, movie or audio file, or a document, the sender has to know the recipient's email or messaging address. If the sender does not have an intended recipient's full and correct address information, then a electronic message will not reach the recipient no matter how much additional information the sender knows about the recipient. For example, even if the sender knows the telephone number, street address and/or employer of the intended recipient, this is not enough information to route a text message to the recipient if the sender does not know the recipient's email address.

The E Number Working Group of the Internet Engineering Task Force (IETF) has proposed an Electronic Numbering (ENUM) standard to address this issue. ENUM uses the Domain Name System (DNS) to map standard international telephone numbers to Web addresses or Uniform Resource Identifier (URI). A URI is the way points of content, such as a page of text, a video or sound clip, a still or animated image, or a program, are identified on the Internet. The most common form of URI is the Web page address, which is a particular form or subset of URI called a Uniform Resource Locator (URL). A URI typically describes the mechanism used to access the resource, the specific computer that the resource is housed on, and the specific name of the resource (a file name) on that computer.

The goal of the ENUM standard is to provide a single number to replace the multiple numbers and addresses for an individual's home phone, business phone, fax, cell phone, and e-mail. ENUM uses global switched telephone numbers as defined by the International Telecommunications Union - Telecommunications Standardization Sector (ITU-T) E.164 standard. The 16 digit E.164 telephone number is split into international, national and user number portions. ENUM translates E.164 telephone numbers into URL and IP addresses. ENUM is described in the IETF RFC (Request for Comments) 2916.

ENUM is a protocol developed for fetching URI's for a given E.164 number. ENUM allows a user to store contact information that can be accessed by other users through the use of one phone number. For instance, one could store a fax, voice, voicemail, e-mail, and home addresses all in a single ENUM Naming Authority Pointer (NAPTR). By using the ENUM, another person could access all the personal contact information contained within the NAPTR.

The ENUM system allows a user to retrieve an email address, if one is actually listed, for a telephone number. ENUM is limited in that the only input parameter is a telephone number. ENUM does not allow a user to use an email address, street address or other information as an input to determine other contact information for a desired recipient.

Another limitation of the ENUM concept is the need to maintain up-to-date personal contact information in the NAPTR for each telephone number. If the information is not current, the ENUM system will not serve its desired purpose. The process of maintaining a database of information for all or most telephone numbers is an enormous task. A portion of the database is bound to be out-of-date at all times. Also, the database serves a single-point of failure for any user that is seeking contact information using a telephone number. If the database has failed, is overloaded or is otherwise unavailable, then users cannot obtain the desired information. Redundant databases could be used to counter the availability problem. However, the use of multiple redundant databases to increase database availability also introduces synchronization problems. Maintaining up-to-date information on all of the databases would a burdensome and time-consuming task requiring continuous effort.

### SUMMARY

The present invention is directed to Dynamic Messaging Address Resolution (DMAR). The invention provides a system and method for routing digital messages, such as mobile messages, electronic mail, etc., across disparate networks utilizing the native message addressing formats of each network. Thus, the usable scope of the native addressing formats for each network are expanded over all connected networks. The invention identifies the nature of, and source network of, message addresses through the use of a configurable address recognition rules engine and uses the native address resolution mechanism of that network to enable use of all addresses on the network for global addressing.

Messaging systems use the invention by querying a network-based server for address resolution or by embedding a DMAR application within the messaging system. The result of this query identifies the type of network addressed and the basic messaging capabilities native to that network and potential reformatting instructions to convert a message into a format that is deliverable to destination network.

As discussed above with respect to ENUM, existing methods that address this problem do so by provisioning a single database that contains duplicated address information from all the connected network's global address databases. The present invention utilizes the databases of the addressee's native network to provide the required information without incurring the costs of data duplication and synchronization. Since many networks' address databases are very large and change often due to adding subscribers, supporting number portability and other factors, the duplication and synchronization cost saved is significant.

The present invention does not reproduce or override the native network's addressing databases. Therefore, changes to those databases are immediately accessible. This allows the invention to take advantage of supporting features that are in place, such as Mobile Number Portability. This enables the layering of a global inter-network messaging infrastructure over disparate networks, allowing users to use a valid address from any of the networks for message addressing.

For example, a user connected to a wireline ISP can send a message to a mobile messaging user using the mobile's E.164 phone number, even if this address is not "legal" or valid on the sender's TCP/IP-based network. If an intended recipient has a wireless device with Mobile Messaging Service (MMS) or Short Messaging Service (SMS), messages sent to those devices typically use the device's telephone number as part of its messaging address. The remainder of the messaging address is typically associated with the service provider's domain name. Although the sender may know the mobile telephone number, he often does not know the recipient's service provider or the service provider's messaging domain name. The present invention uses dynamic messaging address resolution to determine the complete messaging address for the recipient.

In one embodiment, the sender's Internet Service Provider (ISP) uses DMAR to reformat the message address into a useable format. In alternative embodiments, the message is sent to the recipient's ISP or service provider, which utilizes DMAR to categorize the address and to reformat the message as appropriate for the recipient's network.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings in which:

FIGURE 1 is a block diagram of system incorporating one embodiment of the present invention;

FIGURE 2 is a flow chart illustrating one embodiment of the present invention; and

FIGURE 3 is a block diagram of a system incorporating an alternative embodiment of the invention.

### DETAILED DESCRIPTION

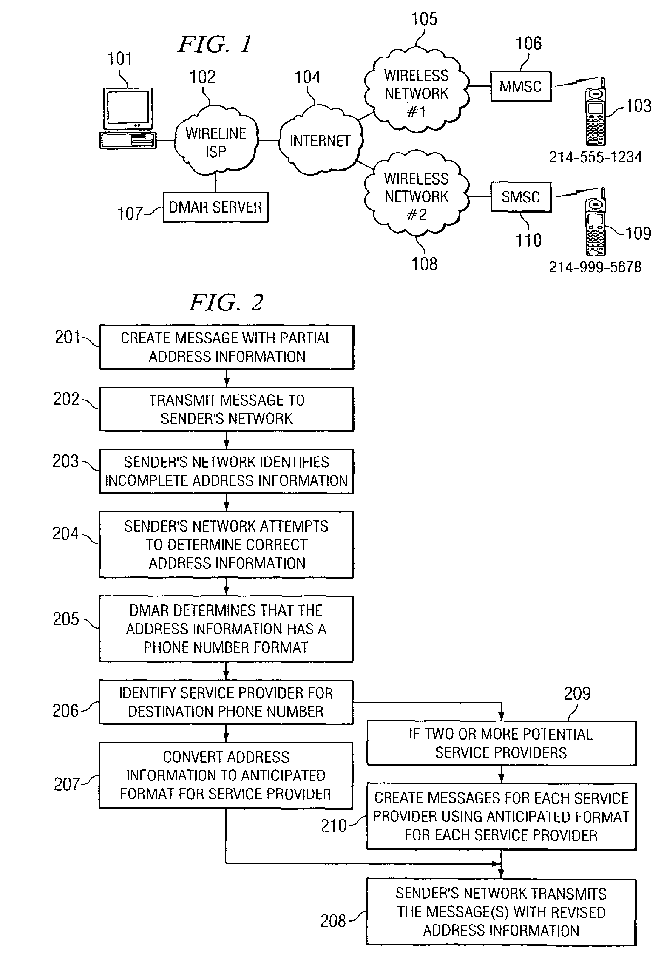

FIGURE 1 is block diagram of a multiple network communications system for use with the present invention. User 101 is connected to wireline Internet service provider 102. User 101 can send messages to other users, such as device 103, via Internet 104 if the user has the recipient's email address. For example, device 103 is assigned the message address of "2145551234@wirelessnetwork1.com", which is device 103's telephone number plus the wireless service provider's domain name. User 101 can write a message to device 103 using this address. Upon sending the message, ISP 102 recognizes the address format and determines that the destination is on another network. Accordingly, IPS 102 routes the message to the recipient's network 105 via Internet 104. Wireless network #1 receives the message and, recognizing the address format, sends the message to Multimedia Messaging Service Center (MMSC) 106, which routes the message to device 103 for display to the user.

User 101 may not know the full email address of device 103. For example, user 101 may only know the telephone number for device 103. In prior systems, if the user attempted to send an email message using only the telephone number, then ISP 102 would not recognize the address format and would typically send user 101 an error message indicating that the email could not be delivered because the address was invalid. The present invention overcomes this problem by providing a system and method for correcting and/or completing the available or attempted email address information. The available or attempted email address information may be a partial, incomplete, indirect, non-native or external address, which may include a portion of a desired email address or information that can be extrapolated to or related to the desired email address with further processing.

Dynamic Message Address Resolution (DMAR) server 107 is used by ISP 102 to resolve partial, incomplete, non-native or external email addresses. For example, if user 101 creates and sends an email message with the recipient address of 2145551234, then ISP 102 will not know how to route the message because the address is not in a useable or expected format. Instead of rejecting the message and sending an error message to user 101, ISP 102 attempts to resolve the unknown address. ISP 102 sends the message or the address to DMAR server 107 for processing.

DMAR server 107 analyzes the address information and identifies it, in this example, as an E.164 telephone number. Under further analysis, DMAR server 107 identifies the telephone number as the telephone number for a mobile device serviced by wireless network #1. DMAR server 107 makes a best efforts attempt to resolve the address by assuming that the message is a MMS or SMS message that is intended for display on the device assigned to the telephone number. DMAR server 107 determines that the domain for wireless network #1 (105) is "wirelessnetwork1.com." For example, DMAR 107 determines that telephone numbers with area code "214" and exchange "555" are assigned to network 105. Accordingly, DMAR server 107 modifies the message address by appending this domain to the telephone number. The message is then returned to ISP 102 for further routing with the modified address "2145551234@wirelessnetwork1.com.'' This message has an address in the correct format and is routed successfully through network 105 to MMSC 106 for transmission to device 103.

Upon sending the message with a modified address, ISP 102 may notify user 101 that the modified address - 2145551234@wirelessnetwork1.com - was used to route the message.

In another embodiment, DMAR server 107 may be unable to determine the particular service provider that services the telephone number in the address line of the message. In such a situation, DMAR server 107 may use a "brute force" approach in its attempt to route the message to the desired recipient. For example, upon receive a message addressed to "2149995678," DMAR server 107 may not have sufficient information to determine that wireless network #1 (105) is the home network for this telephone number. Accordingly, DMAR server 107 cannot identify the particular domain to add to the email address.

However, DMAR server 107 may have sufficient information to determine that wireless network #1 (105) and wireless network #2 (108) both service telephones in the geographic area covered by area code "214." Accordingly, DMAR server creates two new messages with new addresses "2149995678@wirelessnetwork1.com" and "2149995678@wirelessnetwork2.com." Both of these messages are sent to ISP 102, which routes the messages to their respective destination domain servers via Internet 104. That is, a server on network 105 and a server on network 108 both receive incoming messages addressed to a device with the telephone number 214-999-5678. ISP 102 may send a message to user 101 notifying the user that these addresses have been used to route the message. In one embodiment, prior to sending the modified message, user 101 is given the option to approve these addresses or to select none, one or more modified email addresses from a list proposed by DMAR server 107.

Because E.164 telephone numbers are unique, only one device can have the telephone number 214-999-5678. Therefore, it is extremely unlikely that both of these modified email addresses are valid. Instead, as illustrated in FIGURE 1, only device 109 is assigned phone number 214-999-5678. Network 108 recognizes the address "2149995678@wirelessnetwork2.com." and routes the message to Short Message Service Center (SMSC) 110 for delivery to device 109. On the other hand, because telephone number 214-999-5678 is not assigned to any phone in its network, wireless network #1 (105) rejects the message addressed to "2149995678@wirelessnetwork1.com." Network 105 may send a response back to ISP 102 and user 101 notifying them that the message was undeliverable as addressed. Such information may be forwarded to DMAR server 107 for use in resolving future addresses.

FIGURE 2 is a flowchart illustrating the operation of one embodiment of the invention. In 201, a user creates a message to be sent. The user does not know the complete messaging address for the destination party, so the message is created with partial, incomplete, indirect, non-native or external address information. The message is transmitted to the sender's network in step 202. This may be, for example, the sender's ISP if the sender is using a wireline email account. Alternatively, the sender's network may be a wireless network if the sender is transmitting from a wireless device.

In 203, the sender's network receives the message and determines that the address information is incomplete. The sender's network is unable to route the message with the incomplete information. In 204, the sender's network attempts to identify the proper format for the incomplete address information. Using a dynamic messaging address resolution server in 205, the DMAR determines that the partial, incomplete, non-native or external address has a phone number format. In 206, the DMAR identifies the service provider for the destination phone number.

In 207, the network attempts to resolve the partial, incomplete, non-native or external address by converting the address information into a routable format using the service provider identity. For example, as discussed in the example illustrated by FIGURE 1, the network appends the email domain name used by the service provider to the phone number to create a destination address for the message. In 208, the message is transmitted to the destination with the new address information.

If the DMAR or sender's network cannot identify a single service provider associated with the phone number that was listed in the partial, incomplete, non-native or external address information, then, in 209, the network determines which service providers might provide service to that phone number. For example, the DMAR server may create a list of potential service providers using the area code and exchange, or even just the area code, of the telephone number. Once this list of potential service providers is created, then the DMAR server can create email addresses for the message using the phone number and the Internet domain used by those service providers for email.

The above example is more likely to work for phone numbers assigned to wireless devices. Such devices may have MMS or SMS messaging capability and the routing address for those devices would be associated with the device's phone number. If the partial, incomplete, non-native or external address information was associated with a phone number that is assigned to a wireline phone, then the DMAR server would have to use other techniques to resolve the message address.

In one embodiment, the DMAR server determines that a phone number has been used for a message address and that the phone number is assigned to a wireline phone in a home. The DMAR server searches one or more phone directory databases to determine to whom the phone number is assigned. For example, a white pages database search may identify a person and an address associated with the phone number. The DMAR server may then conduct an expanded database search using the phone number, the associated name and/or the associated address in an attempt to identify an email address for the message's intended destination.

The dynamic messaging address resolution server may be a dedicated or shared server or computer running an message address resolution application. The message address resolution application comprises algorithms that utilize the native message addressing formats of the sender and recipient's network to complete the partial, incomplete, non-native or external address information that is provided by the sender. The application recognizes and identifies the nature and source network of the destination addresses through the use of a configurable address recognition rules engine.

In one embodiment, messaging systems using the present invention query a network-based server for address resolution or by embedding the DMAR method within the messaging system. The result of this query identifies the type of network addressed and the basic messaging capabilities native to that network, to be used for message routing and potential reformatting into a message format deliverable to that network. The present invention utilizes the databases of the address' native network to provide the required information.

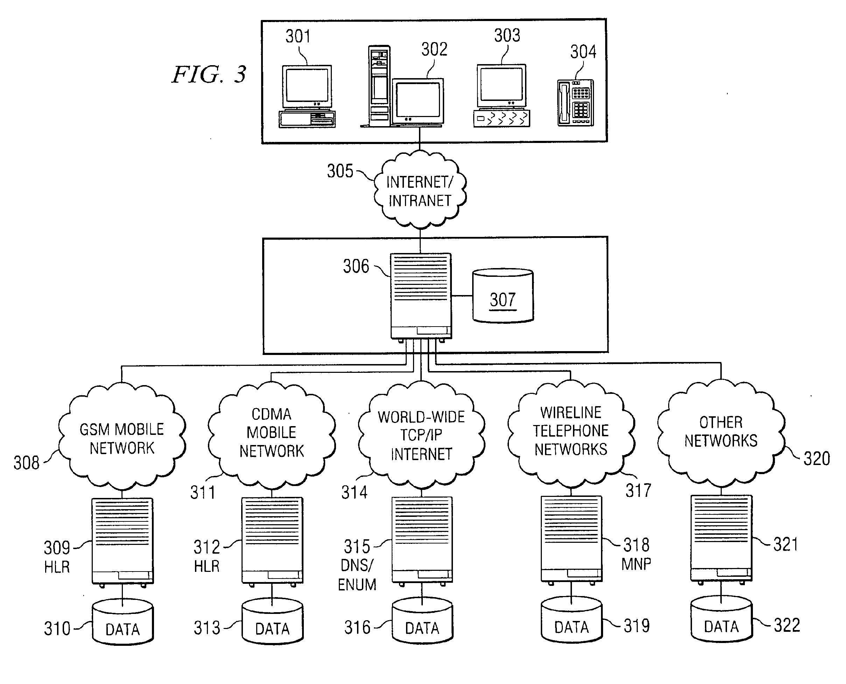

FIGURE 3 is a block diagram of a system operable with the present invention. Address resolution clients 301-304 are examples of devices that may be used to create messages to be sent to other devices. A user creates a message on one of these devices 301-304 and sends the message via network 305, which may be an intranet, the Internet or any other local or wide area network. Network 305 recognizes that the address information for the message is incomplete - i.e. the address is not a "legal" address for known networks and cannot be used for routing the message. Therefore, network 305 routes the message to address resolution server 306 for further processing.

Server 306 extracts the address information and uses address recognition rules engine 307 to categorize and reformat the address into a useable format. Server 306 may query potential destination networks to identify the proper address format for those networks and to determine if the partial, incomplete, non-native or external address information is associated with those networks. If server 306 determines that the partial, incomplete, non-native or external address information is associated with GMS network 308, then it may send a query to Home Location Register (HLR) 309 to request routing data 310. Similarly, if the partial, incomplete, non-native or external address information was associated with CDMA network 311, then server 306 may query HLR 3312 to request routing data 313.

If the partial, incomplete, non-native or external address information is a phone number, server 306 may query DNS/ENUM server 315 on network 314 for routing data 316. When a service provider can be identified from the partial, incomplete, non-native or external routing information, such as a particular wireline telephone service provider 317, then server 306 may query a server 318 on that network for routing data 319.

Server 306 may identify the partial, incomplete, non-native or external address information with non-telephone network 320 in which case server 321 is queried for routing data 322. The routing data my include, for example, a list of valid email addresses or domains that can be used to modify the partial, incomplete, non-native or external message address. Once the routing information is obtained by server 306 and rules engine 307, then the address is corrected or completed and the message is transmitted to the appropriate network for delivery to the desired recipient.

In one embodiment, server 306 and rules engine 307 know or are able to determine the capabilities of the destination network. For example, rules engine 307 may include a database of information listing the capabilities for known networks. Alternatively, as discussed above, server 306 may query the destination network regarding its capabilities. Upon identifying the capabilities of the destination network for a particular message, rules engine 307 directs server 306 to modify the message to conform with the capabilities of the destination network. This modification may be necessary to allow messages to be sent to certain destination networks that do have the same capabilities as the originating network.

For example, SMS messages are limited to 160 characters and have no capability to handle attachments. If a message includes an attached or embedded picture, such as an image file in a JPEG or GIF format, the image could not be processed by an SMS network. Accordingly, when rules engine 307 determines that a message with an attached image file is being sent to an SMS destination network, it directs server 306 to remove the image file and to truncate the message to the first 160 characters of the message, if necessary. In this manner, the message is presented to the destination network in a format that the SMS network can carry and display.

The DMAR system utilizes knowledge of the destination network's capabilities to intelligently modify the addressing information and other message headers. The format and encoding of the message contents and other fields are modified to improve delivery characteristics and to ensure the recipient's ability view the message contents.

As noted above, the DMAR system may cache information about destination networks, such as in a database of information listing the capabilities for known networks. This database may include information learned from previous address lookups or network queries. The database of network capabilities may be further refined by through use of learning algorithms that apply address categorization rules to information received from destination networks.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for routing messages with non-native address information comprising:
identifying non-native address information in a received message from an address resolution client;
determining a destination network associated with the non-native address information; and
modifying the non-native address information to provide complete address information that will ensure that the message is routed to the destination network.

2. The method of claim 1 further comprising:
querying the destination network to obtain routing information; and
reformatting the message using said routing information.

3. The method of claim 1 wherein the non-native address information is a telephone number, and wherein the destination network is a mobile telephone network.

4. The method of claim 3 wherein the telephone number is an E.164 telephone number.

5. The method of claim 4 further comprising:
identifying messaging domain information for the telephone network associated with the E.164 telephone number; and
modifying the non-native address information by appending the messaging domain information to the E.164 telephone number.

6. The method of claim 3 further comprising:
inserting the complete address information into the message to create a modified message; and
transmitting the modified message to the destination network.

7. The method of claim 1 further comprising:
identifying two or more possible destination networks that may be associated with the non-native address information;
creating a modified address for each of the two or more possible destination networks; and
creating a modified message for each possible destination network using the respective modified address for each possible destination network.

8. A system for routing messages by modifying non-native address information in the messages, comprising:
an address resolution server for identifying the non-native address information in the messages; and
an address resolution rules engine for determining possible destination networks associated with the non-native address information.

9. The system of claim 8 further comprising:
means for identifying a type of network addressed by the messages; and
means for identifying the messaging capabilities of the addressed network.

10. The system of claim 9 further comprising:
means for modifying the non-native address information to form complete address information for the addressed network.

11. The system of claim 9 further comprising:
means for querying a destination network to learn the capabilities of a destination network.

12. The system of claim 9 further comprising:
means for modifying message content to conform with the capabilities of a destination network.

13. The system of claim 12 wherein said means for modifying includes:
means for removing attached files from the messages.

14. The system of claim 12 wherein said means for modifying includes:
means for truncating message text to a number of characters accepted by the destination network.

15. A method for modifying non-native address information in electronic messages comprising:
identifying the non-native address information in the message;
determining that the non-native address information is a telephone number;
determining a telephone network associated with the telephone number; and
identifying messaging domain information for the telephone network;
modifying the non-native address information by appending the messaging domain information to the telephone number.

16. The method of claim 15 further comprising:
querying the telephone network to obtain the messaging domain information.

17. The method of claim 15 further comprising:
using portions of an E.164 number to identify the associated telephone network.

18. The method of claim 15 wherein two or more telephone networks may be associated with the telephone number, the method further comprising:
determining routing information for each of the associated telephone networks; and
creating a new message for each associated telephone network.

19. A method for transmitting messages from an originating network to a destination network comprising:
determining the destination network based upon a recipient's address format in a message; and
modifying address information and message content in the message based upon the destination network's capabilities to improve delivery characteristics for the message.

20. The method of claim 19 wherein the modifying step further includes:
modifying the format and encoding of the message contents to ensure that the recipient can view the message contents.
